# EUROPÄISCHE PATENTANMELDUNG

(11) **EP 4 686 082 A2**
(43) Veröffentlichungstag der Anmeldung: **28.01.2026**
(21) Anmeldenummer: 25191334.9
(22) Anmeldetag: 23.07.2025
(51) Int. Cl.: H02P 25/022, H02P 25/03

(54) **VERFAHREN ZUM STEUERN EINER FREMDERREGTEN SYNCHRONMASCHINE MIT RELUKTANZANTEIL FÜR EIN ZUMINDEST TEILWEISE ELEKTRISCH BETRIEBENES KRAFTFAHRZEUG MITTELS EINER STEUEREINRICHTUNG, STEUEREINRICHTUNG SOWIE FREMDERREGTE SYNCHRONMASCHINE**

(30) Priorität: 23.07.2024 DE 102024120874
(71) Anmelder: VOLKSWAGEN AG, 38440 Wolfsburg (DE); AUDI Aktiengesellschaft, 85057 Ingolstadt (DE)
(72) Erfinder: Wirsen-Gümüser, Bjarne, 33098 Paderborn (DE); Brune, Kai, 85120 Hepberg (DE); Korn, Mathias, 93049 Regensburg (DE); Dr. Heidler, Bastian, 85402 Kranzberg (DE); Ruppert, Daniel, 85101 Lenting (DE)
(74) Vertreter: Hofstetter, Schurack & Partner

(57) **Zusammenfassung**

Die Erfindung betrifft ein Verfahren zum Steuern einer fremderregten Synchronmaschine (2) mit Reluktanzanteil für ein zumindest teilweise elektrisch betriebenes Kraftfahrzeug (1) mittels einer Steuereinrichtung (3) der fremderregten Synchronmaschine (2), wobei die fremderregte Synchronmaschine (2) mit zumindest einem Rotor (7) und einem Stator (5) bereitgestellt wird, wobei zum Entmagnetisieren und/oder zum Magnetisieren des Rotors (7) auf den Stator (5) ein Statorstrom (10) mittels einer Statorschaltung (4) der Steuereinrichtung (3) aufgeprägt wird. Ferner betrifft die Erfindung eine Steuereinrichtung (3) sowie eine fremderregte Synchronmaschine (2).

## Beschreibung

Die nachfolgende Erfindung betrifft ein Verfahren zum Steuern einer fremderregten Synchronmaschine mit Reluktanzanteil für ein zumindest teilweise elektrisch betriebenes Kraftfahrzeug mittels einer Steuereinrichtung der fremderregten Synchronmaschine, wobei die fremderregte Synchronmaschine mit zumindest einem Rotor und einem Stator bereitgestellt wird, gemäß dem geltenden Patentanspruch 1. Ferner betrifft die Erfindung eine entsprechende Steuereinrichtung sowie eine fremderregte Synchronmaschine.

Fremderregte Synchronmaschinen (FSM) besitzen im Rotor eine große Induktivität, welche bei Bestromung das zum Betrieb benötigte magnetische Feld des Rotors erzeugt. Der Strom wird durch eine zusätzliche Erregerschaltung von außen in den Rotor eingeprägt.

Aufgrund der Größe der Induktivität wirkt der Rotor als großer magnetischer Energiespeicher, weswegen die Be-/Entstromung des Rotors aus elektrischer Sicht sehr lange dauert. Diese Systemträgheit kann bei Notabschaltung des Traktionssystems zu Problemen wie Überspannungen und Überströmen führen, da die magnetische Energie des Antriebs möglicherweise nicht schnell genug dem System entzogen werden kann.

Eine Absicherung des Antriebssystems gegen solche Überströme beziehungsweise Überspannungen führt dabei zu Mehrkosten sowie zu Mehraufwand.

Aus dem Stand der Technik ist dabei bekannt, dass potentielle Überströme beziehungsweise Überspannungen in der Systemauslegung miteinbezogen werden und die Komponenten entsprechend adäquat dimensioniert sind. Des Weiteren können potentielle Überströme und -spannungen zur Systemauslegung nicht miteinbezogen werden. Der erste Fall führt wiederum zu Mehrkosten und zu einem erhöhten Bauaufwand und die zweite Variante führt zu einer potentiellen Zerstörung von Komponenten des Antriebsstrangs im Fehlerfall.

Die EP 4 160 906 A1 betrifft ein Verfahren zum Regeln einer elektrisch erregten Synchronmaschine mit einem Stator und einem Rotor. Dabei strömen in dem Stator ein Stator-Strom und in dem Rotor ein Rotor-Strom. Der Stator-Strom weist dabei einen den Rotor-Strom beeinflussenden d-Anteil und einen das Drehmoment beeinflussenden q-Anteil auf. Es wird ein quellerzeugter Anteil des Rotor-Stroms über eine Rotor-Quelle des Rotors erzeugt. Ein Stator-erzeugter Anteil des Rotor-Stroms wird über eine Anpassung des d-Anteils des Stator-Stroms erzeugt und dadurch wird der Rotor-Strom in dem Rotor geregelt.

Aufgabe der vorliegenden Erfindung ist es, ein Verfahren, eine Steuereinrichtung sowie eine fremderregte Synchronmaschine mit Reluktanzanteil zu schaffen, mittels welchen ein verbesserter Betrieb der fremderregten Synchronmaschine mit Reluktanzanteil realisiert werden kann.

Diese Aufgabe wird durch ein Verfahren, eine Steuereinrichtung sowie eine fremderregte Synchronmaschine mit Reluktanzanteil gemäß den unabhängigen Patentansprüchen gelöst. Vorteilhafte Ausgestaltungsformen sind in den Unteransprüchen angegeben.

Ein erster Aspekt der Erfindung betrifft ein Verfahren zum Steuern einer fremderregten Synchronmaschine mit Reluktanzanteil für ein zumindest teilweise elektrisch betriebenes Kraftfahrzeug mittels einer Steuereinrichtung der fremderregten Synchronmaschine, wobei die fremderregte Synchronmaschine mit zumindest einem Rotor und einem Stator bereitgestellt wird.

Es ist dabei vorgesehen, dass zum Entmagnetisieren und/oder zum Magnetisieren des Rotors auf den Stator ein Statorstrom mittels einer Statorschaltung der Steuereinrichtung aufgeprägt wird.

Somit kann ein verbesserter Betrieb der fremderregten Synchronmaschine mit Reluktanzanteil realisiert werden.

Insbesondere können durch die Implementierung der entsprechenden Regelungsstrategie die Steuereinrichtung die Nachteile der elektrischen Rotorträgheit ausgeglichen und entsprechende Hardwarekosten sowie Bauraum eingespart werden.

Insbesondere ist somit vorgesehen, dass bei der fremderregten Synchronmaschine mit Reluktanzanteil der Stator und der Rotor wie ein elektrischer Transformator wirken. Eine d- oder q-Stromänderung im Stator führt daher zu einer Stromänderung im Rotor und umgekehrt.

Eine provozierte Stromänderung im Stator führt daher zu einer gewollten Stromänderung im Rotor. Die so eingeprägte Stromänderung im Rotor ist deutlich schneller, als eine Änderung durch eine äußere Erregerschaltung, da die Stromänderung an die elektrische Zeitkonstante des Stators gekoppelt ist, welche deutlich kleiner als die des Rotors ist.

Auf diese Weise kann der Rotor durch den Stator auf- und entmagnetisiert werden. Die benötigte Energie zum Aufrechterhalten des Rotorstroms kann dabei weiterhin durch eine äußere Erregerschaltung bereitgestellt werden.

Mit der gezeigten Lösung ist es möglich, lediglich Änderungen von der Regelungsstrategie und ohne zusätzlichen Hardwareaufwand den Rotor der fremderregten Synchronmaschine mit Reluktanzanteil deutlich schneller umzuladen, als mit dem Verfahren gemäß dem Stand der Technik. Dadurch ist die Regelung der fremderregten Synchronmaschine mit Reluktanzanteil dynamischer und schneller. Der fremderregten Synchronmaschine mit Reluktanzanteil kann schneller als bislang möglich die magnetische Energie entzogen werden, wodurch im Fehlerfall Überströme und Überspannungen gedämpft oder gar vermieden werden können.

Gemäß dem Stand der Technik wird von einem q-Anteil ausgegangen, der exklusiv das Drehmoment einstellt und ein d-Anteil, der exklusiv den Rotorstrom beeinflusst. Dies ist insbesondere bei den Synchronmaschinen gemäß dem Stand der Technik der Fall, die keinen Reluktanzantaiel aufweisen. Gemäß der geltenden Synchronmaschine mit Reluktanzanteil können sowohl mit d- und q-Anteilen das Drehmoment beeinflusst werden, was zu einer höheren Komplexität in der Umsetzung der Funktionalität im Vergleich zum Stand der Technik führt.

Insbesondere kann somit mit der fremderregten Synchronmaschine mit dem zusätzlichen Reluktanzanteil auch ohne q-Anteil das Kraftfahrzeug bewegt werden. Die fremderregte Synchronmaschine mit zusätzlichem Reluktanzanteil kann auch als so genannte Salient Synchronous Machine bezeichnet werden. Gemäß dem Stand der Technik steht der q-Anteil immer mit dem Drehmoment in Bezug, so dass es sich im Stand der Technik insbesondere um eine Synchronmaschine ohne Reluktanzanteil handelt, also insbesondere um eine Non-Salient Synchronuous Machine.

Gemäß einer vorteilhaften Ausgestaltungsform wird über eine Erregerschaltung der Steuereinrichtung ein Erregerstrom für den Rotor bereitgestellt. Insbesondere kann somit zuverlässig die fremderregte Synchronmaschine mit Reluktanzanteil insbesondere im Normalbetrieb entsprechend gesteuert werden. Somit kann mittels einer einzigen Steuereinrichtung sowohl das oben beschriebene Verfahren als auch der Normalbetrieb entsprechend realisiert werden.

Eine weitere vorteilhafte Ausgestaltungsform sieht vor, dass die Statorschaltung mit zumindest sechs Transistoren bereitgestellt wird. Somit kann auf einfache Weise die Statorschaltung ausgebildet werden.

Dabei kann weiterhin vorgesehen sein, dass die Transistoren als MOSFETs bereitgestellt werden. Insbesondere MOSFETs haben sich als sehr zuverlässig erwiesen und können auf einfache Art und Weise entsprechend betrieben werden. Alternativ oder ergänzend können auch IGBT's verwendet werden. Somit kann ein vereinfachter Aufbau der Statorschaltung und somit der Steuereinrichtung bereitgestellt werden.

In einer weiteren vorteilhaften Ausgestaltungsform ist vorgesehen, dass das Verfahren bei einem Betriebsbeginn des Kraftfahrzeugs und/oder bei einem Betriebsende des Kraftfahrzeugs durchgeführt wird. Bei Betriebsbeginn kann beispielsweise vorgesehen sein, dass der Rotor entsprechend magnetisiert wird. Beim Betriebsende kann insbesondere vorgesehen sein, dass der Rotor entsprechend entmagnetisiert wird. Ferner kann beispielsweise das Verfahren auch beim Bremsen, Anfahren beziehungsweise auch bei einer Notabschaltung entsprechend genutzt werden.

Dabei kann weiterhin vorgesehen sein, dass das Verfahren während eines Fahrbetriebs des Kraftfahrzeugs durchgeführt wird. Insbesondere kann somit auch während des Fahrbetriebs die entsprechende Magnetisierung beziehungsweise Entmagnetisierung des Rotors sehr schnell durchgeführt werden. Beispielsweise kann beim Bremsen oder Anfahren im Fahrbetrieb das entsprechende Verfahren durchgeführt werden. Somit kann höchstzuverlässig die Magnetisierung beziehungsweise Entmagnetisierung durchgeführt werden.

Ferner hat es sich als vorteilhaft erwiesen, wenn ein jeweiliger Statorstrom auf eine jeweilige Phase des Stators aufgeprägt wird. Insbesondere kann beispielsweise der Stator drei Phasen aufweisen. Es ist dann vorgesehen, dass ein Statorstrom jeweils auf eine jeweilige Phase, insbesondere auf die d-Achse aufgeprägt wird. Somit kann höchst zuverlässig das Verfahren durchgeführt werden.

In einer weiteren vorteilhaften Ausgestaltungsform ist vorgesehen, dass eine Höhe des Statorstroms durch die Steuereinrichtung vorgegeben wird. Insbesondere kann beispielsweise die Höhe des Statorstroms in Abhängigkeit von einer Ausgestaltung der fremderregten Synchronmaschine, beispielsweise bezüglich eines Drehmoments, ausgestaltet sein. Ferner kann in Abhängigkeit von der Zeitkonstante, in welcher die Magnetisierung beziehungsweise Entmagnetisierung durchzuführen ist, die Höhe des Statorstrom entsprechend vorgegeben werden.

Ein weiterer Aspekt der Erfindung betrifft eine Steuereinrichtung zum Steuern der fremderregten Synchronmaschine mit Reluktanzanteil für ein zumindest teilweise elektrisch betriebenes Kraftfahrzeug, mit zumindest einer Statorschaltung, wobei die elektronische Recheneinrichtung zum Durchführen eines Verfahrens nach dem vorhergehenden Aspekt ausgebildet ist.

Ferner betrifft die Erfindung auch eine fremderregte Synchronmaschine mit Reluktanzanteil für ein zumindest teilweise elektrisch betriebenes Kraftfahrzeug, mit zumindest einer Steuereinrichtung nach dem vorhergehenden Aspekt.

Ein nochmals weiterer Aspekt der Erfindung betrifft ein Kraftfahrzeug mit einer fremderregten Synchronmaschine mit Reluktanzanteil nach dem vorhergehenden Aspekt.

Vorteilhafte Ausgestaltungsformen des Verfahrens sind als vorteilhafte Ausgestaltungsformen der Steuereinrichtung sowie der fremderregten Synchronmaschine mit Reluktanzanteil und des Kraftfahrzeugs anzusehen. Die Steuereinrichtung, die fremderregte Synchronmaschine mit Reluktanzanteil sowie das Kraftfahrzeug weisen hierzu gegenständliche Merkmale auf, um entsprechende Verfahrensschritte durchführen zu können.

In der vorliegenden Offenbarung kann eine Steuereinrichtung/elektronische Recheneinrichtung beispielsweise als ein Datenverarbeitungsgerät mit Verarbeitungsschaltkreisen verstanden werden. Eine Recheneinheit kann also Rechenoperationen durchführen, um Daten zu verarbeiten. Die Rechenoperationen können auch indizierte Zugriffe auf eine Datenstruktur, beispielsweise eine Nachschlagetabelle, LUT (englisch: look-up table), umfassen.

Eine Recheneinheit kann insbesondere einen oder mehrere Computer, einen oder mehrere Mikrocontroller und/oder einen oder mehrere integrierte Schaltkreise, beispielsweise einen oder mehrere anwendungsspezifische integrierte Schaltkreise, ASIC ASIC (englisch: application-specific integrated circuit), ein oder mehrere feldprogrammierbare Gate-Arrays, FPGA, und/oder ein oder mehrere Einchipsysteme, SoC (englisch: system on a chip), umfassen. Die Recheneinheit kann auch einen oder mehrere Prozessoren enthalten, beispielsweise einen oder mehrere Mikroprozessoren, eine oder mehrere Zentraleinheiten, CPU (englisch: central processing unit), eine oder mehrere Grafikverarbeitungseinheiten, GPU (englisch: graphics processing unit), und/oder einen oder mehrere Signalprozessoren, insbesondere einen oder mehrere digitale Signalprozessoren, DSP. Die Recheneinheit kann auch einen physischen oder virtuellen Cluster von Computern oder andere der genannten Einheiten umfassen.

Eine Recheneinheit kann auch eine oder mehrere Hardware- und/oder Software-Schnittstellen und/oder eine oder mehrere Speichereinheiten beinhalten. Dabei kann eine Speichereinheit als flüchtiger Datenspeicher, beispielsweise als dynamischer Direktzugriffsspeicher, DRAM (englisch: dynamic random access memory), oder statischer Direktzugriffsspeicher, SRAM (englisch: static random access memory), oder als nichtflüchtiger Datenspeicher, beispielsweise als Festwertspeicher, ROM (englisch: read-only memory), programmierbarer Festwertspeicher PROM, (englisch: programmable read-only memory), ausgeführt sein, ein löschbarer programmierbarer Festwertspeicher, EPROM (englisch: erasable programmable read-only memory), ein elektrisch löschbarer programmierbarer Festwertspeicher, EEPROM (englisch: electrically erasable programmable read-only memory), ein Flash-Speicher oder Flash-EEPROM, ein ferroelektrischer Direktzugriffsspeicher, FRAM (englisch: ferromagnetic random access memory), ein magnetoresistiver Direktzugriffsspeicher, MRAM (englisch: magnetoresistive random access memory), oder ein Phasenwechsel-Direktzugriffsspeicher, PCRAM (englisch: phase-change random access memory).

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden werden Ausführungsbeispiele der Erfindung beschrieben. Dabei zeigen: Dabei zeigen:
Fig. 1 eine schematische Seitenansicht einer Ausführungsform eines Kraftfahrzeugs mit einer Ausführungsform einer fremderregten Synchronmaschine mit Reluktanzanteil mit einer Ausführungsform einer Steuereinrichtung;
Fig. 2 ein schematisches Blockschaltbild gemäß einer Ausführungsform einer fremderregten Synchronmaschine mit Reluktanzanteil und einer entsprechenden Steuereinrichtung;
Fig. 3 ein schematisches Zeit-Rotorstrom-Diagramm; und
Fig. 4 ein schematisches Zeit-Statorstrom-Diagramm.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind gleiche oder funktionsgleiche Elemente mit den gleichen Bezugszeichen versehen.

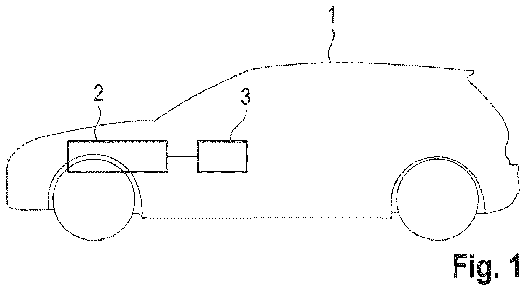

Fig. 1 zeigt eine schematische Seitenansicht einer Ausführungsform eines Kraftfahrzeugs 1. Das Kraftfahrzeug 1 ist dabei insbesondere zumindest teilweise elektrisch betrieben beziehungsweise vollelektrisch betrieben. Das Kraftfahrzeug 1 weist hierzu zumindest eine fremderregte Synchronmaschine 2 mit Reluktanzanteil auf. Die fremderregte Synchronmaschine 2 weist wiederum zumindest eine Steuereinrichtung 3 auf.

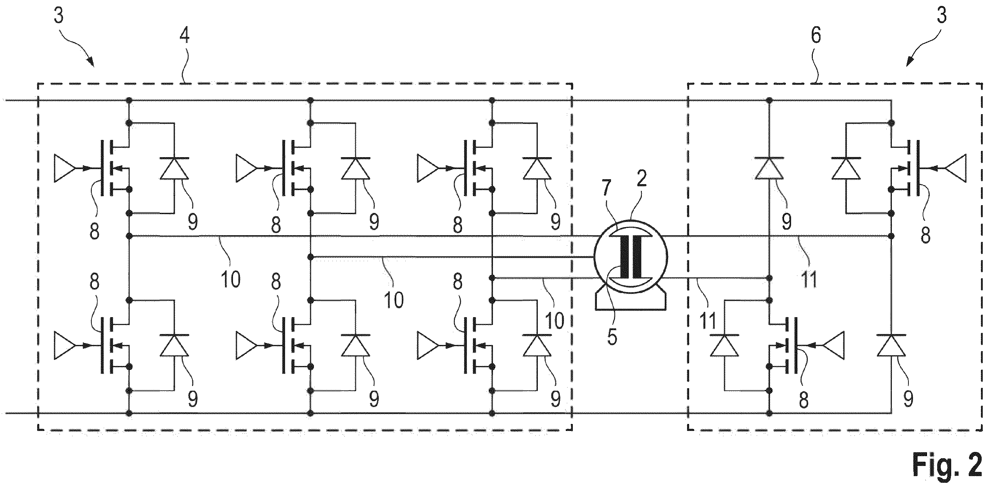

Fig. 2 zeigt ein schematisches Blockschaltbild gemäß einer Ausführungsform einer Steuereinrichtung 3 für die fremderregte Synchronmaschine 2 mit Reluktanzanteil. Im vorliegenden Ausführungsbeispiel ist insbesondere eine Statorschaltung 4 für einen Stator 5 der fremderregten Synchronmaschine 2 sowie eine Erregerschaltung 6 für einen Rotor 7 der fremderregten Synchronmaschine 2 gezeigt.

Die Fig. 2 zeigt dabei insbesondere, dass die Statorschaltung 4 beispielsweise sechs Transistoren 8 aufweisen kann, welche insbesondere als MOSFETs ausgebildet sind. Ferner weist die Statorschaltung 4 noch Sperrdioden 9 auf.

Die Erregerschaltung 6 weist im vorliegenden Ausführungsbeispiel wiederum zwei Transistoren 8 sowie zwei Sperrdioden 9 auf.

Insbesondere zeigt die Fig. 2 somit ein Verfahren zum Steuern der fremderregten Synchronmaschine 2 mit Reluktanzanteil mittels der Steuereinrichtung 3, wobei die fremderregte Synchronmaschine 2 mit zumindest dem Rotor 7 und dem Stator 5 bereitgestellt wird.

Es ist dabei vorgesehen, dass zum Entmagnetisieren und/oder zum Magnetisieren des Rotors 7 auf den Stator 5 ein Statorstrom 10 mittels der Statorschaltung 4 aufgeprägt wird.

Dabei zeigt die Fig. 2 insbesondere, dass ein jeweiliger Statorstrom 10 auf eine jeweilige Phase des Stators 5 aufgeprägt wird, wobei im vorliegenden Ausführungsbeispiel der Stator 5 drei Phasen aufweist. Die Höhe des Statorstroms 10 kann dabei insbesondere durch die Steuereinrichtung 3 vorgegeben werden.

Die Erregerschaltung 6 ist wiederum dazu ausgebildet, einen Erregerstrom 11 für den Rotor 7 bereitzustellen.

Dabei kann weiterhin vorgesehen sein, dass das Verfahren bei einem Betriebsbeginn des Kraftfahrzeugs 1 und/oder bei einem Betriebsende des Kraftfahrzeugs 1 sowie auch während des Fahrbetriebs des Kraftfahrzeugs 1 durchgeführt werden kann.

Insgesamt ist somit vorgesehen, dass die fremderregte Synchronmaschine 2 zwischen dem Stator 5 und dem Rotor 7 wie ein entsprechender elektrischer Transformator wirkt. Eine d- oder q-Stromänderung im Stator 5 führt daher zu einer Stromänderung im Rotor 7 und umgekehrt.

Eine provozierte Stromänderung im Stator 5 führt daher zu einer gewollten Stromänderung im Rotor 7. Die so eingeprägte Stromänderung im Rotor 7 ist deutlich schneller, als eine Änderung durch eine äußere Erregerschaltung 6 möglich wäre, da die Stromänderung an die elektrische Zeitkonstante des Stators 5 gekoppelt ist, welche deutlich kleiner als die des Rotors 7 ist. Auf diese Weise kann der Rotor 7 durch den Stator 5 auf- und entmagnetisiert werden. Die benötigte Energie zum Aufrechterhalten des Rotorstroms 11 wird wiederum weiterhin durch die Erregerschaltung 6 bereitgestellt.

Durch die Implementierung der entsprechenden Regelungsstrategie können die Nachteile der elektrischen Rotorträgheit ausgeglichen und möglicherweise Hardwarekosten eingespart werden.

Daher kann auch vorgesehen sein, dass die entsprechende Regelungsstrategie als Programmcode durch ein Computerprogrammprodukt für die Steuereinrichtung 3 bereitgestellt wird. Das Computerprogrammprodukt kann auf einem entsprechenden computerlesbaren Speichermedium abgespeichert werden.

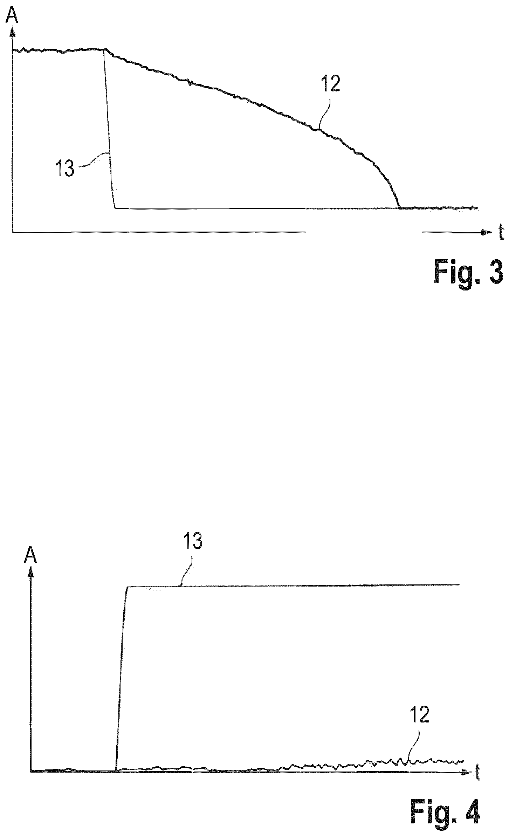

Insbesondere zeigt die Fig. 2 beispielsweise, dass in der Erregerschaltung 6 im konventionellen Fall der Entladung alle Schalter geöffnet werden, so dass an den Rotorwicklungen der fremderregten Synchronmaschine 2 die kleinstmögliche Spannung anliegt. In diesem Fall entspricht der Rotorstrom einer ersten Linie 12 gemäß den Fig. 3 und 4. Insbesondere wird somit das Vorzeichen der Erregerspannung umgekehrt, so dass U_{dc} zu -U_{dc} an der Erregerwicklung anliegt.

Die Fig. 3 zeigt wiederum ein schematisches Zeit (t)-Rotorstrom-Diagramm. Insbesondere ist der Rotorstrom 11 in Ampere angegeben. Dabei ist insbesondere die erste Linie 12 gezeigt, welche dem Stand der Technik entspricht. Durch eine zweite Linie 13 ist wiederum der Rotorstrom 11 gemäß dem erfindungsgemäßen Verfahren gezeigt. Wird nämlich stattdessen durch die Statorschaltung 4 in dem Stator 5 eine Änderung im d-Strom eingeprägt, ergibt sich somit der Verlauf der zweiten Linie 13 des Rotorstroms 11. Der einzuregelnde Sprung im d-Strom ist dabei in der Fig. 4 gezeigt, welche ein Zeit (t)-Statorstrom-Diagramm darstellt. Dabei zeigt wiederum die erste Linie 12 die Entladung gemäß dem Stand der Technik und die zweite Linie 13 die Entladung gemäß dem erfindungsgemäßen Verfahren.

### Bezugszeichenliste

- 1: Kraftfahrzeug
- 2: fremderregte Synchronmaschine
- 3: Steuereinrichtung
- 4: Statorschaltung
- 5: Stator
- 6: Erregerschaltung
- 7: Rotor
- 8: Transistor
- 9: Sperrdiode
- 10: Statorstrom
- 11: Rotorstrom
- 12: erste Linie
- 13: zweite Linie
- t: Zeit
- A: Ampere

## Patentansprüche

1. Verfahren zum Steuern einer fremderregten Synchronmaschine (2) mit Reluktanzanteil für ein zumindest teilweise elektrisch betriebenes Kraftfahrzeug (1) mittels einer Steuereinrichtung (3) der fremderregten Synchronmaschine (2), wobei die fremderregte Synchronmaschine (2) mit zumindest einem Rotor (7) und einem Stator (5) bereitgestellt wird,
**dadurch gekennzeichnet,**
**dass** zum Entmagnetisieren und/oder zum Magnetisieren des Rotors (7) auf den Stator (5) ein Statorstrom (10) mittels einer Statorschaltung (4) der Steuereinrichtung (3) aufgeprägt wird.

2. Verfahren nach Anspruch 1,
**dadurch gekennzeichnet, dass**
über eine Erregerschaltung (6) der Steuereinrichtung (3) ein Erregerstrom (11) für den Rotor (7) bereitgestellt wird.

3. Verfahren nach Anspruch 1 oder 2,
**dadurch gekennzeichnet, dass**
die Statorschaltung (4) mit sechs Transistoren (8) bereitgestellt wird.

4. Verfahren nach Anspruch 3,
**dadurch gekennzeichnet, dass**
die Transistoren (8) als MOSFET's bereitgestellt werden.

5. Verfahren nach einem der vorhergehenden Ansprüche,
**dadurch gekennzeichnet, dass**
das Verfahren bei einem Betriebsbeginn des Kraftfahrzeugs (1) und/oder bei einem Betriebsende des Kraftfahrzeugs (1) durchgeführt wird.

6. Verfahren nach einem der vorhergehenden Ansprüche,
**dadurch gekennzeichnet, dass**
das Verfahren währen eines Fahrbetriebs des Kraftfahrzeugs (1) durchgeführt wird.

7. Verfahren nach einem der vorhergehenden Ansprüche,
**dadurch gekennzeichnet, dass**
dass ein jeweiliger Statorstrom (10) auf eine jeweilige Phase des Stators (5) aufgeprägt wird.

8. Verfahren nach einem der vorhergehenden Ansprüche,
**dadurch gekennzeichnet, dass**
eine Höhe des Statorstroms (10) durch die Steuereinrichtung (3) vorgegeben wird.

9. Steuereinrichtung (3) zum Steuern einer fremderregten Synchronmaschine (2) mit Reluktanzanteil für ein zumindest teilweise elektrisch betriebenes Kraftfahrzeug (1), mit zumindest einer Statorschaltung (4), wobei die Steuereinrichtung (3) zum Durchführen eines Verfahrens nach einem der Ansprüche 1 bis 8 ausgebildet ist.

10. Fremderregte Synchronmaschine (2) mit Reluktanzanteil für ein zumindest teilweise elektrisch betriebenes Kraftfahrzeug (1), mit zumindest einer Steuereinrichtung (3) nach Anspruch 9.
